**Europäisches Patentamt**

**European Patent Office**

**Office européen des brevets**

(11) Publication number: **0 012 732**

**B1**

# EUROPEAN PATENT SPECIFICATION

(45) Date of publication of patent specification: **16.05.84**

(21) Application number: **79850101.1**

(22) Date of filing: **19.11.79**

(51) Int. Cl.³: **B 29 C 5/04**

(54) Method of making a thin-walled hollow object of plastic and arrangement therefor.

(30) Priority: **01.12.78 SE 7812385**

(43) Date of publication of application:
**25.06.80 Bulletin 80/13**

(45) Publication of the grant of the patent:
**16.05.84 Bulletin 84/20**

(84) Designated Contracting States:
**AT BE CH DE FR GB IT LU NL**

(56) References cited:
**DE-A-2 000 694**
**DE-A-2 604 142**
**GB-A-1 380 791**
**US-A-3 703 348**
**US-A-3 885 016**

(73) Proprietor: **AKTIEBOLAGET ELECTROLUX**
**Luxbacken 1**
**S-105 45 Stockholm (SE)**

(72) Inventor: **Mard, Roland Ingvar Emanuel**
**Sorselevägen 31**
**S-162 25 Vällingby (SE)**

(74) Representative: **Hagelbäck, Evert Isidor**
**c/o AB Electrolux Patentavdelningen**
**S-105 45 Stockholm (SE)**

Courier Press, Leamington Spa, England.

## Description

The present invention relates to a method of moulding a thin-walled hollow object of plastic in a mould and to an arrangement for performing the method.

It is known to produce thin-walled hollow objects by so-called rotational moulding of vinyle plastisoles which are created by heating in a heated mould, which is cooled before demoulding. Originally, by rotational moulding a method for moulding was meant in which the mould was rotated simultaneously about two axes perpendicular to each other. Later, the same process has been largely used for sintering or melting of fine powders of thermoplastic, which is effected in a heated mould which is cooled before the object is removed from the mould. Other methods of rotational moulding are known in which one starts with a liquid phase which forms a rigid body developing reaction heat. In most cases one starts with an increased temperature in the mould in which the chemicals in liquid phase remain during a sufficiently long time before a viscosity increase occurs, whereafter the temperature of the mould is further increased in order to cause a fast curing of the material when the liquid has been spread over the mould surface.

Another known method is described in British patent specification No. 1,380,791 according to which chemicals in liquid phase are cured to a rigid body at room temperature, defined as a temperature between 10 and 43°C. Although the energy consumption is low this method has the severe drawback that each separate moulding takes too long to make the method suitable in mass production. When one starts with chemicals in liquid phase which develop reaction heat as described for rotational moulding, the time required for rotation in order to have the liquid distributed over the mould surface is several minutes and after that a further time of rotation is required before the curing has advanced so far that the rotation can be allowed to cease. In the said patent specification it is stated that rotation during at least 20—30 minutes is required for performing the process.

The object of the present invention is to remove the said drawback by proposing a method which can be performed by simple means in a short time. The method according to the invention is for this purpose characterized by the features of the following Claim 1. According to the invention chemicals are selected which cure so fast that the time for curing after coating the mould surfaces with the curable material is short. Hereby the time required for keeping the mould moving until the viscosity of the liquid has increased so much that there will not be any significant redistribution due to gravity in the mould can be reduced to the least possible, i.e. so that movements of the mould after distribution of material can be dispensed with. The equipment for performing the method will be much simpler since according to the invention it is not necessary to use simultaneous rotation of the mould about two axes. When using the invention for small objects a shorter time than 1 minute can be used for the distribution of liquid over the mould surface. For large objects, of course the required time will be longer but it can still be kept shorter than 2 minutes.

According to the invention the mould in a preferred embodiment is heated to a temperature between 35 and 75°C. Such heating can be made with simple means. After moulding the object is removed from the mould without any need for the mould to be cooled except for a possible cooling required to keep the mould temperature within the desired range. As mentioned above, the process is very fast and therefore well suited for mass production of certain objects. Beside that it requires only a small quantity of energy. The mixture of chemicals in liquid phase to be used in the mould is preferably kept at room temperature. As starting material for applying the method a system of chemicals in liquid phase is suitable which cures fast to a rigid body within the said temperatures of the mixture and of the mould.

When choosing chemicals it has to be noted that the mixture shall have an upper viscosity limit for practical use which gives the desired time for covering of the mould surfaces with the liquid mixture. The object so created must not be permanently deformed by the forces exerted when removing the object from the mould at the prevailing mould temperature.

### Example 1

The method according to the invention was tested in experiments with a mould in the geometrical shape of a cube. It had walls of aluminium sheets of 10 mm thickness and with edges of 250 mm length. The mould was coated with a release agent and with a coating laquer layer on the release agent. The mould was heated to 45°C. Centrally on one side of the cube there was an opening of 150 by 150 mm. The mould was placed with the cube opening turned upwards. A mixture of components at a temperature of 20°C as described below was injected through the opening and thereby the opposite inner surface was coated with a liquid mixture. Thereafter the mould was turned through about 90° in a vertical plane, whereafter it was turned somewhat less than 360° about a horizontal axis, at a low speed when a mould side with mixture floating thereon was inclined to the horizontal plane and at a high speed therebetween. Thereby an even and complete coating of the four side surfaces of the mould was obtained. The mixture of the components and the introduction of these components into the mould took 20 seconds and coating of the inner surfaces of the mould took a further 20 seconds. The object could be removed from the mould after 15 minutes.

Example 2

The experiment according to Example 1 was carried out until the inner surfaces of the mould were coated with the component mixture. Onto this shell urethane cellular plastic was foamed giving a rigid body with a density of 35 g/l. It was foamed in situ 4 minutes after the introduction of the first mixture in the mould. The object could be removed from the mould already after 10 minutes due to the fact that the foam had set.

The mixture of components for the shell in Examples 1 and 2 above consisted in:

50 parts of a three functional polyol with glycerol as initiator, propoxylated and with 75% primary hydroxyl groups by final etoxylation and with a hydroxyl number of 32 mg KOH/g and having a viscosity of 900 centipoise at 25°C. The density was 1,011 kg/dm$^3$.

50 parts of a threefunctional polyol with triethanol amine as initiator, propoxylated to a hydroxyl number of 525 mg KOH/g and having a viscosity of 400 centipoise at 25°C and a density of 1,05 kg/dm$^3$.

70 parts of crude methylene diphenyl diisocyanate with a functionality of 2,7 and isocyanate group contents of 30,7% and a viscosity of 270 centipoise at 25°C and a density of 1,24.

These components will not be fully miscible until about 20 seconds after start of mixing.

After setting at a thickness of 2 mm the object of urethane plastic made according to Example 1 cracked when folded double. Otherwise it was relatively rigid and impact resistant.

In spite of the fact that the isocyanate was not degasified and the polyoles not dewaterized a smooth laquered surface was obtained. The urethane plastic adhered effectively to the laquer layer. Gas bubbles formed in the urethane layer during the process tended to concentrate to the surface which was out of contact with the mould, which is supposed to be due to temperature conditions.

The experiments related above are to be seen as examples of the process of the invention, which has a general application and extension as described above.

The invention can be used for instance with a mould for refrigerator cabinets. Several other applications are possible. Thus, as mentioned, a layer forming a decorative surface of the object can be placed on the layer of release agent. When this new layer is free of solvent or/and has set (if it is a two-component system) a layer with an average thickness of about 1,5 mm of the component mixture can be applied. The tack free time of the mixture shall be long enough to admit adhesion to a reinforcement layer e.g. glass fibre with a fibre length of 3 mm that sticks to the surface. Then another layer with an average thickness of about 3 mm is applied, which wets the glass fibre layer and adheres to the first layer. In this way, a glass fibre reinforced object with a decorated surface can be made. It is also possible according to the invention to insert fittings or other details of metal or some other material in the mould and have them well attached to the object formed during moulding.

When operating with a mould of large total surface it may be advantageous to supply the material mixture to the mould in two batches. The mould is then turned between the first batch, which is supplied to one surface part, and the second batch, which is supplied to another, preferably opposite, surface part. Then the mould is turned over followed by turning according to the above description.

When the material is supplied to the mould it is an advantage if the surface part of the mould where the material is supplied is wholly coated with material already by the supply. If the surface part is mainly plane, coating can be achieved by a turning movement, but if the surface part is very curved it is possible to supply the material from a mixing machine through a spray head, which from the start distributes the material over the entire surface part.

Normally, thin-walled hollow objects are made with an even material distribution over the wall surfaces. However, it is also possible to apply the invention for producing such an object with a material thickness which is larger in certain parts than in others. In that case a thin-walled hollow object is made according to the above description and then the object is left in the mould in order to be used as a mould at a second moulding with supply of a suitable quantity of mixture and distribution of this mixture over the desired part of the surface.

**Claims**

1. Method of moulding a thin-walled hollow object of plastic in a mould including:

a) the mould, which has at least one angle between mould surfaces, coated with a release agent, is heated to a temperature above room temperature,

b) a mixture of thermo-setting resin components curable at this temperature is made in liquid form,

c) the mixture is supplied to the mould,

d) the mould is given a turning movement so that the material mixture is caused due to gravity to spread over the mould surface,

e) hardening of the material to a rigid body is awaited and thereafter the object is removed from the mould, characterized in that the material is caused to spread over the mould surface once only and that the mould is turned faster when the mixture is flowing over an angle between mould surfaces and slower or with an interruption when the mixture is flowing over a smooth surface.

2. Method according to Claim 1, characterized in that the mould after supply of the material mixture is turned through about 90° in a vertical plane, whereafter it is turned about a horizontal axis so that its surfaces will be coated with liquid material before the material mixture has gelled.

3. Method according to Claim 1, characterized in that the mould is turned over first through 180° in one plane and thereafter back through 90°.

4. Method according to Claim 1, characterized in that the mould is turned over through 270° in a plane.

5. Method according to Claim 1, characterized in that the mould is turned during 2 minutes at the most.

6. Method according to Claim 1, characterized in that the mould is turned through less than 360°.

7. Method according to Claim 1, characterized in that an isocyanate-based liquid composition is used as curable mixture.

8. Method according to any of Claims 1—7, characterized in that first a layer of mixture coating the surfaces of the mould is applied and then a foamable and curable material is supplied to the mould.

9. Method according to Claim 8, characterized in that the mould is provided with a male mould before foaming so that the foamed body formed in the mould has a special shape on the surfaces.

10. Method according to Claim 1, characterized in that a curable and foamable mixture is used.

11. Method according to any preceding Claim, characterized in that first a layer of mixture coating the mould surfaces is applied to the mould and that glass fibre flock or other fibre flock is supplied, that the mould movement is repeated so that the fibres are distributed over the liquid surface while the mixture is still tacky and that thereafter a further layer of a mixture is applied, which at least in part wets the fibres and coats the surfaces.

12. Method according to any preceding Claim, characterized in that the mould with an object in it is used as a mould in a second moulding with supply of mixture and distribution thereof over part of the surface of the object in order to obtain parts having a larger material thickness than others.

13. Arrangement for moulding of a thin-walled hollow object of plastic in a mould in the way proposed in any of Claims 1—12, characterized by a mould with means for turning it over through 90° in a vertical plane and other means for turning it about a horizontal axis.

14. Arrangement according to Claim 13, characterized in that the means for turning of the mould have control means by which the turning speed during a process can be varied according to a programme adjusted in advance.

## Revendications

1. Procédé pour mouler un corps creux à paroi mince en matière plastique dans un moule, dans lequel:

a) le moule, qui comporte au moins un angle entre les surfaces du moule, et revêtu d'un agent anti-adhésif, est chauffé à une température supérieure à la température ambiante,

b) un mélange de constituants d'une résine thermodurcissable pouvant durcir à cette température est réalisé sous forme liquide,

c) le mélange est fourni au moule,

d) le moule est soumis à un mouvement de rotation, de manière à ce que le mélange de matériau soit étalé par gravité sur la surface du moule,

e) le durcissement du matériau en un corps rigide est attendu, puis le corps est retiré du moule, caractérisé en ce que le matériau est amené à s'étaler sur la surface du moule une fois seulement, et en ce que le moule est tourné plus rapidement lorsque le mélange s'écoule sur un angle entre les surfaces du moule, et plus lentement, ou avec une interruption, lorsque le mélange s'écoule sur une surface lisse.

2. Procédé selon la revendication 1, caractérisé en ce que, après la fourniture du mélange de matériaux, le moule est tourné sur environ 90° dans un plan vertical, après quoi il est tourné autour d'un axe horizontal de manière à ce que ses surfaces soient revêtues du matériau liquide avant que le mélange du matériau se soit gélifié.

3. Procédé selon la revendication 1, caractérisé en ce que le moule est tout d'abord tourné sur 180° dans un plan, puis retourné sur 90°.

4. Procédé selon la revendication 1, caractérisé en ce que le moule est tourné sur 270° dans un plan.

5. Procédé selon la revendication 1, caractérisé en ce que le moule est tourné pendant 2 minutes au plus.

6. Procédé selon la revendication 1, caractérisé en ce que le moule est tourné sur moins de 360°.

7. Procédé selon la revendication 1, caractérisé en ce que, comme mélange durcissable, est utilisée une composition liquide à base d'isocyanate.

8. Procédé selon l'une des revendications 1 à 7, caractérisé en ce que tout d'abord est appliquée une couche de mélange revêtant les surfaces du moule, puis un matériau pouvant se développer en mousse et durcir est fourni au moule.

9. Procédé selon la revendication 8, caractérisé en ce que le moule comprend un moule mâle avant la mise en mousse, de manière à ce que le corps mis en mousse formé dans le moule présente sur ses surfaces une forme particulière.

10. Procédé selon la revendication 1, caractérisé en ce qu'est utilisé un mélange durcissable et pouvant se développer en mousse.

11. Procédé selon l'une des revendications précédentes, caractérisé en ce qu'est tout d'abord appliqué au moule une première couche de mélange revêtant les surfaces du moule, et en ce qu'un flocage de fibres de verre ou autre flocage fibreux est fourni, en ce que le mouvement du moule est répété de manière à ce que les fibres soient réparties sur la surface du liquide tandis que le mélange n'est pas encore sec au toucher, et en ce qu'une autre couche de mélange est ensuite appliquée, qui humidifie au moins en partie les fibres et revêt les surfaces.

12. Procédé selon l'une des revendications précédentes, caractérisé en ce que le moule muni d'un corps est utilisé comme moule d'un second moulage dans lequel le mélange est fourni et réparti sur une partie de la surface du corps afin d'obtenir des parties ayant un épaisseur de matériau plus importante que d'autres.

13. Dispositif pour mouler un corps creux à paroi mince en matière plastique dans un moule par le procédé selon l'une des revendications 1 à 12, caractérisé en ce que le moule comprend des moyens pour tourner celui-ci sur 90° dans un plan vertical et d'autres moyens pour le tourner autour d'un axe horizontal.

14. Dispositif selon la revendication 13, caractérisé en ce que les moyens pour faire tourner le moule comportent des moyens de commande par lesquels la vitesse de rotation pendant un processus peut varier en fonction d'un programme réglé par avance.

**Patentansprüche**

1. Verfahren zur Herstellung eines dünnwandigen Hohlkörpers aus Kunststoff in einer Form, bei welchem:

a) die Form, die zumindest einen Winkel zwischen Formflächen aufweist und mit einem Trennmittel beschichtet ist, auf eine Temperatur oberhalb Zimmertemperatur erhitzt wird,

b) eine Mischung aus warmhärtbaren Harzkomponenten, die bei dieser Temperatur härtbar ist, in flüssiger Form hergestellt wird,

c) die Mischung in die Form eingebracht wird,

d) die Form in Drehung versetzt wird, sodaß die Materialmischung unter Schwerkrafteinfluß über die Formfläche verteilt wird,

e) das Aushärten des Materials zu einem festen Körper abgewartet und der Formkörper anschließend aus der Form entnommen wird,

dadurch gekennzeichnet, daß das Material nur einmal zur Verteilung auf der Formwand gebracht wird und daß die Form rascher gedreht wird, wenn die Mischung über einen Winkel zwischen Formwänden fließt, und langsamer oder mit Unterbrechung, wenn die Mischung über eine glatte Fläche fließt.

2. Verfahren nach Anspruch 1, dadurch gekennzeichnet, daß die Form nach Zufuhr der Materialmischung über etwa 90° in einer vertikalen Ebene gedreht wird, worauf sie um eine horizontale Achse gedreht wird, sodaß ihre Oberflächen mit flüssigem Material überzogen werden, bevor die Mischung geliert ist.

3. Verfahren nach Anspruch 1, dadurch gekennzeichnet, daß die Form zuerst über 180° in einer Ebene gedreht und dann über 90° zurückgedreht wird.

4. Verfahren nach Anspruch 1, dadurch gekennzeichnet, daß die Form über 270° in einer Ebene gedreht wird.

5. Verfahren nach Anspruch 1, dadurch gekennzeichnet, daß die Form höchstens 2 Minuten lang gedreht wird.

6. Verfahren nach Anspruch 1, dadurch gekennzeichnet, daß die Form über weniger als 360° gedreht wird.

7. Verfahren nach Anspruch 1, dadurch gekennzeichnet, daß eine flüssige Mischung auf Isocyanatbasis als härtbare Mischung verwendet wird.

8. Verfahren nach einem der Ansprüche 1 bis 7, dadurch gekennzeichnet, daß zuerst eine die Formflächen überziehende Schicht aus der Mischung aufgetragen wird und daß der Form dann ein schäumbares und härtbares Material zugeführt wird.

9. Verfahren nach Anspruch 8, dadurch gekennzeichnet, daß die Form vor dem Schäumen mit einer Patrize versehen wird, sodaß der in der Form gebildete geschäumte Körper eine spezielle Oberflächengestalt hat.

10. Verfahren nach Anspruch 1, dadurch gekennzeichnet, daß eine härtbare und schäumbare Mischung verwendet wird.

11. Verfahren nach einem der vorhergehenden Ansprüche, dadurch gekennzeichnet, daß der Form zuerst eine die Formflächen überziehende Schicht aus der Mischung zugeführt wird und daß Glasfaserstaub oder anderer Faserstaub eingetragen wird, daß die Formbewegung wiederholt wird, sodaß die Fasern über die flüssige Oberfläche verteilt werden, während die Mischung noch klebrig ist und daß anschließend eine weitere Schicht einer Mischung aufgetragen wird, die zumindest teilweise die Fasern benetzt und die Oberflächen überzieht.

12. Verfahren nach einem der vorhergehenden Ansprüche, dadurch gekennzeichnet, daß die Form mit einem darin befindlichen Formkörper in einem zweiten Formvorgang eingesetzt wird, wobei Mischung zugeführt und über einem Teil der Oberfläche des Formkörpers verteilt wird, um Teile mit einer Materialstärke zu erhalten, die größer ist als die anderer Teile.

13. Vorrichtung zum Formen eines dünnwandigen Hohlkörpers aus Kunststoff in einer Form in der in einem der Ansprüche 1 bis 12 vorgeschlagenen Weise, gekennzeichnet durch eine Form mit Einrichtungen zu ihrer Drehung über 90° in einer vertikalen Ebene und anderen

9

**0 012 732**

10

Einrichtungen zu ihrer Drehung um eine horizontale Achse.

14. Vorrichtung nach Anspruch 13, dadurch gekennzeichnet, daß die Einrichtungen zum Drehen der Form Steuerungen aufweisen, mit welchen die Drehgeschwindigkeit während eines Verfahrens entsprechend einem im vorhinein eingestellten Programm verändert werden kann.